# DEMANDE DE BREVET EUROPEEN

(11) **EP 4 072 150 A1**
(43) Date de publication de la demande: **12.10.2022**
(21) Numéro de dépôt: 22166170.5
(22) Date de dépôt: 31.03.2022
(51) Int. Cl.: H04N 21/258, H04N 21/431, H04N 21/482

(54) **PROCEDE DE GESTION D'UNE INTERFACE GRAPHIQUE REPRESENTANT UN GUIDE DES PROGRAMMES**

(30) Priorité: 06.04.2021 FR 2103520
(71) Demandeur: WIZTIVI, 44470 Carquefou (FR)
(72) Inventeur: VINCENT, Damien, 44470 CARQUEFOU (FR); ROULET, Etienne, 44470 CARQUEFOU (FR)
(74) Mandataire: Loyer & Abello

(57) **Abrégé**

L'invention concerne un procédé gestion d'une interface graphique représentant un guide des programmes, l'interface graphique comportant une grille de programmes (15) et un pointeur de carte active (19),
dans lequel le procédé de gestion comporte :
- afficher une portion affichable (6),
- recevoir une commande de sélection de la carte active,
- consulter au moins une base de données choisie parmi une base de données relative aux séries de cartes et une base de données relative à l'utilisateur,
- configurer un menu d'action (24) pour afficher une ou plusieurs icônes d'action (25),
- générer une carte modale (22) comportant ledit menu d'action (24),
- déplacer dans une première direction un ensemble de séries comprenant la série de carte active et les séries de cartes situées après la série de carte active dans la première direction, de sorte à dévoiler un espace d'affichage (26),
- afficher la carte modale (22) dans l'espace d'affichage (26),
- déplacer le pointeur de carte active (19) sur l'un des icônes d'action (25) de la carte modale (22).

## Description

### Domaine technique

L'invention se rapporte au domaine de la gestion d'interface graphique et, plus particulièrement au domaine de la gestion d'une interface graphique représentant un guide des programmes.

### Arrière-plan technologique

Il existe aujourd'hui de nombreux supports de diffusion de contenus média ainsi qu'une pluralité de chaînes de diffusion de ces contenus média. Ainsi, de nombreuses chaînes de télévision ou encore de stations de radio diffusent une grande variété de programmes. Afin de permettre aux utilisateurs de connaître à l'avance les programmes qu'ils pourront suivre, chaque chaîne de diffusion fournit une liste des programmes qu'elle prévoit de diffuser au cours d'une journée. Les utilisateurs peuvent ainsi consulter les programmes de chaque acteur de diffusion afin de décider le contenu média qu'ils souhaitent regarder et/ou écouter durant leur temps libre.

Afin de consulter simultanément les programmes d'une pluralité de chaîne de diffusion, il existe des guides de programmes sous forme de tableaux formant une grille de programmes dont un premier axe représente une échelle de temps et un second axe représente les différentes chaînes de diffusion. Un tel tableau représente par exemple les programmes diffusés par une pluralité de chaînes de télévision durant une portion de l'après-midi ou encore durant la soirée. Ainsi, le guide des programmes affiche des informations sur les programmes qui seront diffusés à une heure donnée sur une chaîne de diffusion donnée.

Afin de renseigner l'utilisateur sur un programme particulier, l'interface graphique comporte en outre un pointeur permettant d'identifier visuellement un programme en cours de consultation par l'utilisateur. Ce pointeur peut prendre de nombreuses formes comme par exemple la surbrillance du programme et/ou l'affichage d'informations complémentaires sur le programme en cours de consultation. Lorsque l'utilisateur navigue dans le guide des programmes, le pointeur du programme consulté est déplacé pour être associé aux différents programmes consultés ou la grille de programmes est déplacé par rapport au pointeur d'identification en fonction des commandes de navigation données par l'utilisateur.

A chacun de ces déplacements de la grille de programmes ou du pointeur d'identification, la grille de programmes affichée est synchronisée par rapport au nouveau programme en cours de consultation par l'utilisateur.

Pour afficher un nombre suffisant de programmes de manière lisible sur un dispositif d'affichage, seules les informations clefs de chaque programme sont présentées dans le guides programme, comme par exemple le titre du programme et l'instant de début de programme.

L'utilisateur peut être désireux de recevoir plus d'informations sur un programme particulier avant de par exemple visualiser son contenu ou d'enregistrer son contenu.

Pour cela, il est connu de l'art antérieur, après demande de l'utilisateur d'obtenir plus d'informations sur un programme, d'afficher une fenêtre dite « pop-up » dans l'interface graphique et par-dessus la grille de programmes, dans laquelle des informations supplémentaires sur le programme sont données.

Toutefois, une telle fenêtre pop-up ne permet pas à l'utilisateur de continuer sa navigation dans la grille de programmes ou de continuer à la visualiser, sans avoir à fermer cette fenêtre. Ces fenêtres pop-up entrainent en général une surcharge cognitive pour l'utilisateur, notamment parce que la fermeture de la fenêtre pop-up provoque un retour dans la grille de programmes qui avait été masquée, de sorte que l'utilisateur n'est plus immédiatement conscient de, et doit donc redécouvrir, la position à laquelle il avait interrompu sa navigation dans la grille.

En variante, il est également connu de l'art antérieur d'afficher une fenêtre dite « pop-in » dans l'interface graphique mais cette fois en bas de l'interface graphique, dans laquelle des informations supplémentaires sur le programme sont données.

De la même manière, ces fenêtres entrainent une surcharge cognitive de l'utilisateur en ajoutant des informations par-dessus d'autres informations. De plus, elles obligent l'utilisateur à déplacer son regard de manière répété pouvant entrainer une fatigue visuelle.

### Résumé

Une idée à la base de l'invention est d'améliorer l'ergonomie de l'interface graphique lors de la visualisation d'informations supplémentaires sur un programme.

Une autre idée à la base de l'invention est de limiter la charge cognitive lors de l'affichage de ces informations.

Selon un mode de réalisation, l'invention fournit un procédé de gestion d'une interface graphique représentant un guide des programmes, l'interface graphique comportant :
- une grille de programmes formée d'une pluralité de séries de cartes de programme, chaque série de cartes de programme étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un descriptif du programme, les cartes de programme d'une série de cartes de programme étant positionnées par ordre chronologique le long d'un premier axe de l'interface graphique, la pluralité de séries de cartes de programmes étant positionnée le long d'un deuxième axe de l'interface graphique,
- un pointeur de carte active qui est une zone de l'interface graphique, la carte de programme de l'interface graphique sur laquelle le pointeur de carte active est positionné constituant une carte active de l'interface graphique et la série de cartes de programme contenant la carte active constituant une série active de l'interface graphique, dans lequel le procédé de gestion comporte :
- afficher une portion affichable de l'interface graphique sur un dispositif d'affichage correspondant à une plage horaire prédéfinie, la portion affichable comportant un sous-ensemble de la pluralité de séries de cartes de programme, la portion affichable comprenant pour chaque série de cartes de programme dudit sous-ensemble l'ensemble des cartes de programme qui ont un instant de début de programme compris dans la plage horaire prédéfinie,
- recevoir une commande de sélection de la carte active,
- consulter une base de données relative aux séries de cartes pour obtenir des données d'état relatives à la série active et à la carte active et une base de données relative à l'utilisateur pour obtenir des données d'état relatives à l'utilisateur,
- configurer un menu d'action pour afficher une ou plusieurs icônes d'action en fonction desdites données d'état relatives à la série active, à la carte active et à l'utilisateur, ladite ou chaque icône d'action étant sélectionnable pour commander des actions relatives au programme associé à la carte active,
- générer une carte modale comportant ledit menu d'action,
- déplacer dans une première direction selon le deuxième axe un ensemble de séries formé des séries de carte comprenant la série de carte active et les séries de cartes situées après la série de carte active dans la première direction, de sorte à dévoiler un espace d'affichage dans la portion affichable,
- afficher la carte modale dans l'espace d'affichage,
- déplacer le pointeur de carte active sur l'un des icônes d'action de la carte modale.

La portion affichable comporte un nombre initial de séries de cartes de programme de sorte que le déplacement de l'ensemble de séries vient diminuer le nombre de séries de cartes de programme présents dans la portion affichable.

Grâce à ces caractéristiques, les informations supplémentaires demandés par l'utilisateur apparaissent à l'endroit où se trouvait le pointeur de carte et donc le regard de l'utilisateur, permettant à l'utilisateur de garder un regard fixe sur la portion affichable. De plus, afin de limiter la charge cognitive de l'utilisateur, une pluralité de séries de carte ne concernant pas la sélection de l'utilisateur sont désaffichées en les écartant de la portion affichable de sorte à limiter la quantité d'informations présente. Enfin, bien que de nouvelles informations aient été affichées dans la portion affichable, l'utilisateur se trouve toujours dans la grille de programmes et peut donc continuer à naviguer dans celle-ci.

Ainsi, l'utilisateur est guidé tout au long de son interaction avec la machine pour accomplir des tâches techniques telles que l'enregistrement d'un programme lors de la navigation dans un guide de programme.

Selon des modes de réalisation, un tel procédé de gestion peut comporter une ou plusieurs des caractéristiques suivantes.

Selon un mode de réalisation, la grille de programmes comprend un menu des chaînes de diffusion s'étendant parallèlement au deuxième axe et comportant pour chaque série de cartes de programme un élément descriptif de la chaîne de diffusion,

Selon un mode de réalisation, la grille de programmes comprenant un menu des temps s'étendant parallèlement au premier axe et comprenant une pluralité d'heures de la journée espacés régulièrement

Selon un mode de réalisation, la carte modale comporte des éléments descriptifs supplémentaires de la carte active, les éléments descriptifs supplémentaires étant extraits de la base de données relative aux séries de cartes.

Par exemple, ces éléments descriptifs supplémentaires peuvent être un résumé du programme, la catégorie du programme, l'année de diffusion du programme, etc.

Selon un mode de réalisation, l'étape de consultation de base de données est réalisée de sorte à consulter la base de données relative aux séries de cartes pour obtenir des données d'état relatives à la série active et la base de données relative à l'utilisateur pour obtenir des données d'état relatives à l'utilisateur.

Selon un mode de réalisation, le menu d'action comporte un icône d'action « Aller sur la chaîne », l'icône d'action « Aller sur la chaîne » étant sélectionnable pour lancer le programme diffusé à un instant présent par la série active.

Selon un mode de réalisation, le menu d'action comporte un icône d'action « Plus d'infos », l'icône d'action « Plus d'infos » étant sélectionnable pour afficher une fenêtre dans l'interface graphique et par-dessus la portion affichable comprenant les éléments descriptifs supplémentaires et des éléments descriptifs complémentaires.

Selon un mode de réalisation, l'ensemble de séries est un premier ensemble de séries, et dans lequel l'étape de déplacement comprend également :
- déplacer dans une deuxième direction opposée à la première direction un deuxième ensemble de séries formé des séries de carte situées après la série de carte active dans la deuxième direction.

Ainsi, le déplacement du premier ensemble et du deuxième ensemble permet de dévoiler un espace d'affichage plus important, l'espace d'affichage étant toujours placé à l'endroit où était situé le pointeur de carte active.

Selon un mode de réalisation, l'étape de configuration du menu d'action comporte les sous-étapes suivantes :
- déterminer un état de diffusion du programme relatif à la carte active parmi les états « diffusion en cours » et « pas de diffusion en cours » en fonction d'un instant présent,
- en fonction desdites données d'états, déterminer un état de droit d'accès relatif à la série active parmi les états « autorisé à recommencer » et « non autorisé à recommencer », l'état de droit d'accès étant extrait de la base de données relative aux séries de cartes,
- si l'état de diffusion est « diffusion en cours » et que l'état de droit d'accès est « autorisé à recommencer », afficher dans le menu d'action un icône d'action « Recommencer », l'icône d'action « Recommencer » étant sélectionnable pour lancer un enregistrement du programme associé à la carte active depuis l'instant de début de programme de la carte active.

Selon un mode de réalisation, l'étape de configuration du menu d'action comporte les sous-étapes suivantes :
- en fonction desdites données d'états, déterminer un état de favoris relatif à la carte active parmi les états « favoris » et « non favoris », l'état de favoris étant extrait de la base de données relative à l'utilisateur,
- si l'état de favoris est « non favoris », afficher dans le menu d'action un icône d'action « Ajouter aux favoris », l'icône d'action « Ajouter aux favoris » étant sélectionnable pour modifier l'état de favoris associé à la carte active par « favoris » dans la base de données relative à l'utilisateur,
- si l'état de favoris est « favoris », afficher dans le menu d'action un icône d'action « Supprimer des favoris », l'icône d'action « Supprimer des favoris » étant sélectionnable pour modifier l'état de favoris associé à la carte active par « non favoris » dans la base de données relative à l'utilisateur.

Selon un mode de réalisation, l'étape de configuration du menu d'action comporte les sous-étapes suivantes :
- en fonction desdites données d'états, déterminer un état de droit d'accès relatif à la série active parmi les états « autorisé à enregistrer » et « non autorisé à enregistrer », l'état de droit d'accès étant extrait de la base de données relative aux séries de cartes,
- si l'état de droit d'accès est « autorisé à enregistrer », afficher dans le menu d'action un icône d'action « Enregistrer », l'icône d'action « Enregistrer » étant sélectionnable pour programmer un enregistrement du programme associé à la carte active sur un dispositif d'enregistrement.

Selon un mode de réalisation, la carte active est située au centre de la portion affichable avant l'étape de déplacement, la carte modale et l'espace d'affichage étant situées au milieu de la portion affichable selon le deuxième axe.

Ainsi, le regard de l'utilisateur est dirigé vers le centre du dispositif d'affichage lorsqu'il réalise la commande de sélection de la carte active et reste diriger dans cette zone lors de l'affichage de la carte modale.

Selon un mode de réalisation, le procédé comporte :
- recevoir une commande de navigation présentant une direction de navigation le long du premier axe dans l'interface graphique,
- déplacer le pointeur de carte active d'un icône d'action dans la direction de navigation.

Selon un mode de réalisation, le procédé comporte :
- recevoir une commande de navigation présentant une direction de navigation le long du deuxième axe dans l'interface graphique,
- masquer la carte modale,
- déplacer dans une deuxième direction opposée à la première direction l'ensemble de séries de sorte à combler l'espace d'affichage dans la portion affichable,
- positionner le pointeur de carte active sur la carte active,
- déplacer le pointeur de carte active d'une carte de programme dans la direction de navigation.

Selon un mode de réalisation, le procédé comporte :
- recevoir une commande de navigation présentant une direction de navigation le long du deuxième axe dans l'interface graphique,
- masquer la carte modale,
- déplacer dans la deuxième direction le premier ensemble de séries, et déplacer dans la première direction le deuxième ensemble de séries, de sorte à combler l'espace d'affichage dans la portion affichable,
- positionner le pointeur de carte active sur la carte active,
- déplacer le pointeur de carte active d'une carte de programme dans la direction de navigation.

Ainsi, si l'utilisateur souhaite changer de série active, il peut réaliser cette opération simplement avec une commande de navigation quand bien même une carte modale serait affichée.

Selon un mode de réalisation, le procédé comporte :
- recevoir une commande de retour arrière,
- masquer la carte modale,
- déplacer dans une deuxième direction opposée à la première direction l'ensemble de séries de sorte à combler l'espace d'affichage dans la portion affichable,
- positionner le pointeur de carte active sur la carte active.

Selon un mode de réalisation, le procédé comporte :
- recevoir une commande de retour arrière,
- masquer la carte modale,
- déplacer dans la deuxième direction le premier ensemble de séries, et déplacer dans la première direction le deuxième ensemble de séries, de sorte à combler l'espace d'affichage dans la portion affichable,
- positionner le pointeur de carte active sur la carte active.

Ainsi, une opération simple permet de revenir à l'état de la portion affichable avant l'étape de réception de la commande de sélection, l'utilisateur connaissant sa position dans la grille de programmes y compris lorsque la carte modale est affichée.

Selon un mode de réalisation, le procédé comporte avant l'étape de réception d'une commande de sélection, les étapes suivantes :
- recevoir une commande de navigation présentant une direction de navigation le long du premier axe ou du deuxième axe dans l'interface graphique,
- déplacer le pointeur de carte active d'une carte de programme dans la direction de navigation.

Selon un mode de réalisation, la commande de sélection est générée à l'aide d'un organe de commande comportant une touche de sélection.

Selon un mode de réalisation, la commande de navigation est générée à l'aide d'un organe de commande comportant des touches de déplacement correspondant au premier axe et au deuxième axe.

Selon un mode de réalisation, la commande de retour arrière est générée à l'aide d'un organe de commande comportant une touche « retour arrière ».

Alternativement, la commande de sélection, la commande de retour arrière ou la commande de navigation peut également être une commande vocale générée par un organe de contrôle vocale traitant les ordres vocaux donnés par l'utilisateur. Ces commandes peuvent être également générées par tout autre moyen technique connu.

Selon un mode de réalisation, la dimension d'une carte de programme selon le premier axe est proportionnelle à une durée du programme.

Ainsi, une première carte de programme ayant une durée deux fois plus longue qu'une deuxième carte de programme aura également une dimension selon le premier axe deux fois plus importante que la deuxième carte de de programme. L'utilisateur peut ainsi visualiser et comparer facilement la durée des programmes.

La durée d'un programme est calculée à l'aide de l'instant de fin de programme et l'instant de début de programme.

Selon un mode de réalisation, la dimension d'une carte de programme est indépendante de la durée du programme.

Ainsi, les cartes de programme peuvent par exemple avoir une dimension identique selon le premier axe, indépendamment de la durée de chaque programme.

Selon un mode de réalisation, la dimension d'une carte de programme de la portion affichable selon le deuxième axe est identique aux cartes de programme adjacentes.

Selon un mode de réalisation, l'invention fournit aussi un dispositif de gestion d'une interface graphique comportant un module de commande, l'interface graphique comportant :
une grille de programmes formée d'une pluralité de séries de cartes de programmes, chaque série de cartes de programme étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un descriptif du programme, les cartes de programme d'une série de cartes de programme étant positionnées par ordre chronologique le long d'un premier axe de l'interface graphique, la pluralité de séries de cartes de programmes étant positionné le long d'un deuxième axe de l'interface graphique,
un pointeur de carte active qui est une zone de l'interface graphique, la carte de programme de l'interface graphique sur laquelle le pointeur de carte active est positionné constituant une carte active de l'interface graphique et la série de cartes de programme contenant la carte active constituant une série active de l'interface graphique,

- afficher une portion affichable de l'interface graphique sur un dispositif d'affichage correspondant à une plage horaire prédéfinie, la portion affichable comportant un sous-ensemble de la pluralité de séries de cartes de programme, la portion affichable comprenant pour chaque série de cartes de programme dudit sous-ensemble, l'ensemble des cartes de programme qui ont un instant de début de programme compris dans la plage horaire prédéfinie,
dans lequel le module de commande est configuré pour :
- recevoir une commande de sélection de la carte active,
- consulter une base de données relative aux séries de cartes pour obtenir des données d'état relatives à la série active et à la carte active et une base de données relative à l'utilisateur pour obtenir des données d'état relatives à l'utilisateur,
- configurer un menu d'action pour afficher une ou plusieurs icônes d'action en fonction desdites données d'état relatives à la série active, à la carte active et à l'utilisateur, ladite ou chaque icône d'action étant sélectionnable pour commander des actions relatives au programme associé à la carte active,
- générer une carte modale comportant ledit menu d'action,
- déplacer dans une première direction selon le deuxième axe un ensemble de séries formé des séries de carte comprenant la série de carte active et les séries de cartes situées après la série de carte active dans la première direction, de sorte à dévoiler un espace d'affichage dans la portion affichable,
- afficher la carte modale dans l'espace d'affichage,
- déplacer le pointeur de carte active sur l'un des icônes d'action de la carte modale.

Selon un mode de réalisation, l'invention fournit aussi un système de gestion comportant un dispositif de gestion d'une interface graphique précité et un serveur, le serveur et le dispositif de gestion d'une interface graphique étant reliés l'un à l'autre à l'aide d'un réseau d'accès.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 représente schématiquement un système d'affichage de guide des programmes.
[Fig. 2] La figure 2 représente l'affichage du guide de programmes comportant un pointeur de carte active illustrant la carte active.
[Fig. 3] La figure 3 représente l'affichage du guide de programmes de la figure 2 en réponse à une commande de sélection de la carte active avant l'apparition de la carte modale.
[Fig. 4] La figure 4 représente l'affichage du guide de programmes de la figure 2 en réponse à une commande de sélection de la carte active après l'apparition de la carte modale.
[Fig. 5] La figure 5 représente l'affichage du guide de programmes de la figure 4 en réponse à une commande de navigation présentant une direction de navigation le long du deuxième axe.
[Fig. 6] La figure 6 représente l'affichage du guide de programmes de la figure 4 en réponse à une commande de navigation présentant une direction de navigation le long du premier axe.

### Description des modes de réalisation

La description ci-après est réalisée à titre illustratif dans le cadre d'un guide des programmes pour télévision. Cependant, l'interface graphique décrite ci-dessous peut être appliquée à de nombreux domaines comme par exemple dans le cadre d'un guide des programmes de diffusion de station de radio, de programmes multimédia sur l'Internet ou autre.

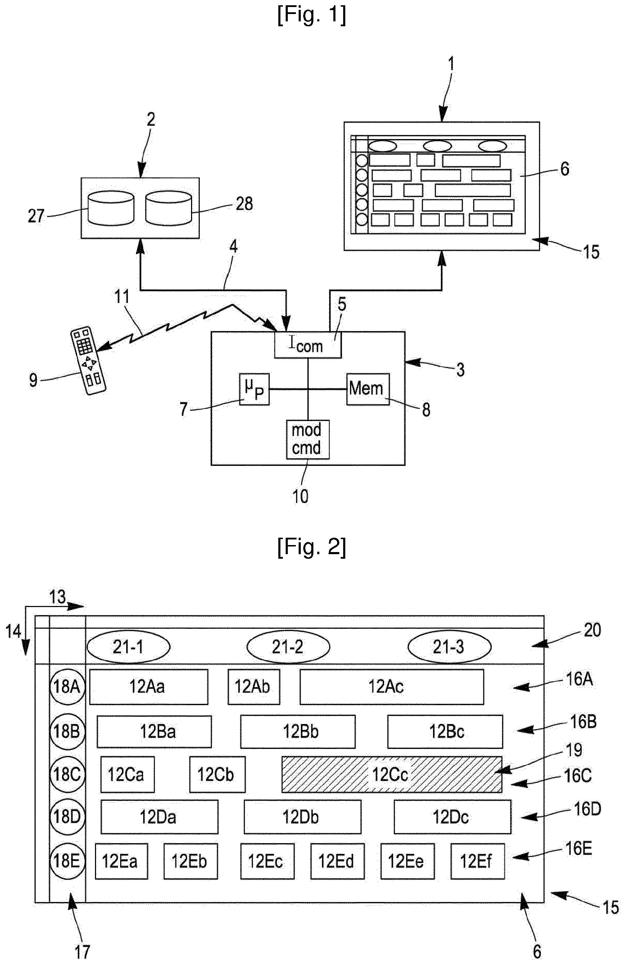

En référence à la figure 1, un téléviseur 1 est relié à un serveur distant 2 de distribution de télévision numérique par l'intermédiaire d'un boîtier d'accès 3 et d'un réseau d'accès 4. Le boîtier d'accès 3 est par exemple placé à proximité du téléviseur 1 voire mécaniquement intégré avec celui-ci. Le réseau d'accès 4 peut être un réseau radio, filaire à haut débit, par exemple un réseau de cuivre, câbles coaxiaux ou de fibres optiques.

Une fonction du boîtier d'accès 3 est de permettre la réception de signaux de télévision depuis le serveur distant 2. Une autre fonction du boîtier d'accès 3 est de fournir une interface graphique d'un guide des programmes. Une telle interface graphique est générée par le boîtier d'accès 3 à partir d'informations de programmation de diffusions transmises depuis le serveur distant 2 via le réseau d'accès 4. Ces informations sont extraites de différentes bases de données telles que la base de donnée relative aux séries de carte 27 et la base de donnée relative à l'utilisateur 28. La base de donnée relative aux séries de carte 27 est donc situé dans le serveur distant 2. La base de donné relative à l'utilisateur peut quant à elle soit être située dans le serveur distant 2 comme représenté en figure 1, soit être située directement dans le boitier d'accès 3.

Le boîtier d'accès 3 comporte un module de communication 5 connecté au réseau d'accès 4 pour recevoir les différentes informations depuis le serveur distant 2. Comme illustré sur la figure 1, le module de communication 5 est également connecté au téléviseur 1 afin de transmettre l'interface graphique générée par le boîtier d'accès 3 ainsi que les contenus audio et vidéo correspondant aux programmes à diffuser. La connexion entre le boîtier d'accès 3 et le téléviseur 1 est réalisée de toute manière adaptée, par exemple à l'aide d'un câble HDMI, d'un câble péritel, d'une connexion sans fil, d'un câblage réseau ou autre. Une portion affichable 6 de l'interface graphique est ainsi affichée par le téléviseur 1.

Afin de traiter les signaux reçus depuis le serveur distant 2, le boîtier d'accès 3 comporte un microprocesseur 7 et une mémoire interne 8. Le boîtier d'accès 3 peut aussi comporter d'autres modules physiques ou fonctionnels (non illustrés) pour offrir des fonctionnalités plus riches. De tels modules sont par exemple des modules de lecture de dispositif de stockage externe (DVD, carte SD, disque dur, etc.), un module démultiplexeur, un module de décodage de signal, des connectiques supplémentaires ou encore des modules de génération d'interface graphique pour générer des interfaces graphiques de gestion destinées à gérer le boîtier d'accès 3 et ses différentes fonctionnalités. En particulier, le boîtier d'accès 3 comporte un module de commande 10 configuré pour générer l'interface graphique de guide des programmes et gérer la navigation dans l'interface graphique de guide des programmes.

Le boîtier d'accès 3 est piloté par un utilisateur à l'aide de tout moyen adapté, par exemple au moyen d'une télécommande 9. Cette télécommande 9 est reliée au module de communication 5 du boîtier d'accès 3, par exemple via des signaux radio ou infrarouges 11. La télécommande 9 permet par exemple de contrôler et/ou d'activer les différentes fonctions du boîtier d'accès 3, à savoir la sélection de chaîne, la configuration de l'affichage, la navigation dans un programme enregistré etc. La télécommande 9 permet également de sélectionner des cartes de programme 12 de l'interface graphique et de naviguer dans le guide des programmes comme cela sera décrit ci-après en regard des figures 2 à 6.

Les figures 2 à 6 illustrent le fonctionnement d'un procédé de génération d'une interface graphique ainsi que de navigation dans l'interface graphique. Plus particulièrement, les figures 2 à 6 illustrent différents états de la portion affichable 6 au cours de la navigation. Ce procédé est mis en œuvre par le module de commande 10.

L'accès à l'interface graphique de guide des programmes se fait par tout moyen adapté, par exemple via une touche dédiée de la télécommande 9 ou encore par navigation, sélection et activation d'une icône dédiée dans une interface graphique de gestion du boîtier d'accès 3.

Lorsque le boîtier d'accès 3 reçoit une instruction d'affichage de l'interface graphique, il génère une interface graphique. L'interface graphique comporte un premier axe 13 qui est un axe temporel 13 représentatif d'un intervalle de temps et un deuxième axe 14 qui est un axe de chaînes 14 représentatif de chaînes de diffusion.

L'interface graphique comporte en outre une grille de programmes 15 comportant une pluralité de séries de cartes de programme 16, chaque série de cartes de programme 16 étant associée à une chaîne de diffusion. La grille 15 comporte en outre sur chaque série de cartes de programme 16 une pluralité de cartes de programme 12 représentant successivement les programmes diffusés au cours du temps sur la chaîne de diffusion associée.

Les cartes de programme 12 sont positionnées par ordre chronologique le long de l'axe temporel 13 pour chaque série de carte de programme 16. De plus, chaque carte de programme 12 comporte une pluralité d'attributs de programme incluant un instant de début de programme, un instant de fin de programme et un descriptif du programme, par exemple le titre du programme.

Dans le mode de réalisation représenté aux figures 2 à 6, la grille de programmes 15 comporte un menu des chaînes de diffusion 17 s'étendant parallèlement à l'axe des chaînes 14. Le menu des chaînes 17 comporte pour chaque série de cartes de programme 16 un élément descriptif de la chaîne de diffusion comme le logo de la chaîne de diffusion.

La grille de programmes 15 comporte de plus un menu des temps 20 s'étendant parallèlement à l'axe des temps 13. Le menu des temps 20 comprend une pluralité d'heures de la journée 21 espacés régulièrement les uns des autres, par exemple par tranche d'une heure ou d'une demi-heure. Ici, l'axe des temps 14 est orienté de gauche à droite tandis que l'axe des chaines 13 est orienté de haut en bas. L'inverse pourrait également être réalisé.

Seule une portion de l'interface graphique, appelée par la suite portion affichable 6, est affichée sur le téléviseur 1. En effet, afin d'afficher les informations sur les programmes diffusés de manière lisible sur le téléviseur 1, seul un sous-ensemble des séries de cartes de programme 16 est affiché en même temps. De même, seul un sous-ensemble des cartes de programmes 12 associées à chaque chaîne de diffusion est affiché en même temps. Les séries de cartes de programme 16 qui font partie de la portion affichable 6 à l'état initial peuvent être sélectionnées de nombreuses manières, par exemple en sélectionnant les premières chaînes de diffusion de la série de chaîne de diffusions, les dernières chaînes de diffusions consultées par l'utilisateur, les chaines de diffusions les plus consultées par l'utilisateur ou tout autre moyen adapté à la sélection des chaînes de diffusion. Les cartes de programme 12 qui font partie de la portion affichable 6 à l'état initial peuvent être sélectionnées par exemple en choisissant l'instant présent comme horaire de référence afin de choisir les cartes de programme en cours de diffusion à l'instant présent.

Le menu des temps 20 de la portion affichable 6 correspond ainsi à une plage horaire prédéfinie qui, par exemple, encadre l'instant présent ou commence par l'instant présent. Ainsi, dans le cas d'une plage horaire prédéfinie allant de 15h à 16h30, le menu des temps 20 peut comporter les heures de la journée 21 correspond à 15h, 15h30, 16h et 16h30.

L'interface graphique comporte également un pointeur de carte active 19 mobile ou fixe superposé à l'image permettant d'identifier le programme actif, en affichant l'élément graphique correspondant à la carte active en surbrillance, à l'aide d'une bordure élargie de l'élément graphique associé au programme actif, d'un fond distinct ou tout autre moyen adapté. Sur les figures 2 à 6, le pointeur de carte active 19 désignant la carte active est symbolisé par des rayures dans la carte active. La série de cartes de programme 16 contenant la carte active est nommée la série active.

Dans la suite du texte et sur les figures 2 à 6, des cartes de programme 12 d'une chaîne de diffusion A à des instants de début de diffusion successifs se voient attribuer le signe de référence 12Aa, 12Ab, 12Ac, etc. De la même manière, une série de cartes de programme 16 d'une chaîne de diffusion C se verra attribuer le signe de référence 16C et l'élément descriptif 18 d'une chaîne de diffusion D se verra attribuer le signe de référence 18D. Les exemples illustrés présentent des séries de cartes de programme 16 présentant un nombre de cartes de programme 12 différent. Il est bien évident que le procédé de gestion prévoit également que des séries de cartes de programme 16 peuvent présenter un nombre de cartes de programme 12 identique.

La figure 2 représente ainsi un état initial du guide de programmes 15 pour lequel la portion affichable 6 est affichée. Dans l'exemple illustré, la portion affichable 6 comporte cinq séries de cartes de programme 16A, 16B, 16C, 16D, 16E correspondant aux chaînes de diffusion A, B, C, D, E et chacune de ces séries de carte de programme 16A-16E comporte une pluralité de cartes de programmes 12a, 12b, 12c, 12d, 12e, 12f. Ainsi le programme b de la chaîne de diffusion C aura pour carte de programme la carte 12Cb. Le pointeur de carte active 19 est ici positionné initialement sur la carte de programme 12Cc qui est donc la carte active, la série active étant la série de carte de programme 16C. D'une manière générale, la portion affichable 6 peut comporter un nombre prédéfini de séries de cartes de programmes et chaque série de cartes de programme de la portion affichable peut comprendre un nombre de cartes de programme égal au nombre de programmes dont l'instant de début de programme est compris dans la plage horaire affichée. La plage horaire affichée peut être plus ou moins importante selon le format disponible du dispositif d'affichage de sorte que les informations restent lisibles pour un utilisateur.

De plus, dans le mode de réalisation illustré en figure 2, le pointeur de carte active 19 est situé au milieu de la portion affichable 6 selon l'axe des chaînes 14 de sorte que la série active est également située au milieu de la portion affichable 6 selon l'axe des chaînes 14. Le pointeur de carte active 19 peut également situé globalement au milieu de la portion affichable 6 selon l'axe des temps 13.

Dans le mode de réalisation représenté sur les figures 2 à 6, la dimension des cartes de programme 12 est proportionnelle à la durée du programme. Ainsi, comme visible sur la figure 2 notamment, la durée du programme de la carte de programme 12Cc est supérieure à la durée du programme de la carte de programme 12Ab de sorte que la dimension de la carte de programme 12Cc est supérieure à la dimension de la carte de programme 12Ab. Deux cartes de programme 12 ayant une durée identique auront donc une dimension identique, comme représenté notamment avec les programmes de la série de cartes 16F. Dans un autre mode de réalisation non représenté, la dimension des cartes de programme 12 est indépendante de la durée du programme de sorte que chaque carte de programme 12 peut avoir une dimension identique aux cartes de programme adjacentes.

L'utilisateur peut être désireux de recevoir plus d'informations sur un programme particulier avant de par exemple visualiser son contenu ou d'enregistrer son contenu. Il va être décrit par la suite le procédé de gestion de l'interface graphique selon un mode de réalisation en partant de la portion affichable 6 illustrée en figure 2 et permettant d'afficher de nouvelles informations sur demande de l'utilisateur en évitant toutefois une surcharge cognitive pour l'utilisateur.

En partant de la portion affichable de la figure 2, la carte de programme 12Cc est la carte active sur laquelle donc le pointeur de carte active 19 est positionné. Afin d'afficher de nouvelles informations sur la carte active 12Cc, l'utilisateur va envoyer une commande de sélection via par exemple une télécommande 9.

Après la réception de cette commande de sélection, le module de commande 10 va interroger le serveur distant 2 et notamment les bases de données 27, 28. Dans ces bases de données, il va récolter des données d'état relatives à la carte active 12Cc, à la série active 16C et à l'utilisateur.

Par la suite, un menu d'action 24 est configuré pour afficher ou ne pas afficher des icônes d'action 25 en fonction des données d'état récoltées précédemment. Chaque icône d'action 25 affichée est sélectionnable afin de commander des actions relatives au programme associé à la carte active 12Cc dans le présent exemple. Par ailleurs des icônes d'action ne sont pas affichées lorsqu'elles correspondent à des actions qui ne sont pas possibles ou pas disponibles ou pas autorisées en fonction des données d'états.

En exemple de tels icônes d'action 25, il peut y avoir dans le menu d'action 24 :
- un icône d'action 25-1 « Aller sur la chaîne », l'icône d'action 25-1 « Aller sur la chaîne » étant sélectionnable pour lancer le programme diffusé à un instant présent par la série active 16C ;
- un icône d'action 25-2 « Plus d'infos », l'icône d'action 25-2 « Plus d'infos » étant sélectionnable pour afficher une fenêtre dans l'interface graphique et par-dessus la portion affichable 6 comprenant des éléments descriptifs supplémentaires 23 et des éléments descriptifs complémentaires ;
- un icône d'action « Recommencer », l'icône d'action « Recommencer » étant sélectionnable pour lancer un enregistrement du programme associé à la carte active depuis l'instant de début de programme de la carte active ;
- un icône d'action 25-3 « Ajouter aux favoris », l'icône d'action 25-3 « Ajouter aux favoris » étant sélectionnable pour modifier l'état de favoris associé à la carte active par « favoris » dans la base de données relative à l'utilisateur 28 ;
- un icône d'action « Supprimer des favoris », l'icône d'action « Supprimer des favoris » étant sélectionnable pour modifier l'état de favoris associé à la carte active par « non favoris » dans la base de données relative à l'utilisateur 28 ;
- un icône d'action 25-4 « Enregistrer », l'icône d'action 25-4 « Enregistrer » étant sélectionnable pour programmer un enregistrement du programme associé à la carte active sur un dispositif d'enregistrement.

Les éléments descriptifs supplémentaires 23 peuvent être par exemple un résumé du programme, la catégorie du programme, l'année de diffusion du programme. Les éléments descriptifs complémentaires 24 peuvent être par exemple une liste des acteurs, un résumé du début du programme, des critiques sur le programme, etc.

Dans le mode de réalisation représenté, l'icône d'action 25-1 « Aller sur la chaîne » et l'icône d'action 25-2 « Plus d'infos » sont des icônes 25 qui sont toujours affichés dans le menu d'action.

L'icône d'action « Recommencer », l'icône d'action 25-3 « Ajouter aux favoris », l'icône d'action « Supprimer des favoris », l'icône d'action 25-4 « Enregistrer » sont affichés ou non dans le menu d'action selon les données d'état récoltées dans les bases de données 27, 28.

L'icône d'action « Recommencer » nécessite la vérification de deux états pour son affichage :
- un état de diffusion du programme relatif à la carte active, ici la carte de programme 12Cc, parmi les états « diffusion en cours » et « pas de diffusion en cours » en fonction d'un instant présent,
- ainsi qu'un état de droit d'accès, extrait de la base de données des séries 27, relatif à la série active parmi les états « autorisé à recommencer » et « non autorisé à recommencer ».

Ainsi, si l'état de diffusion est « diffusion en cours » et que l'état de droit d'accès est « autorisé à recommencer », l'icône d'action « Recommencer » sera affiché dans le menu d'action 24, et sinon l'icône d'action « Recommencer » ne sera pas affiché.

L'icône d'action 25-3 « Ajouter aux favoris » et l'icône d'action « Supprimer des favoris » nécessitent la vérification d'un état pour leur affichage à savoir un état de favoris étant extrait de la base de données relative à l'utilisateur 28, parmi les états « favoris » et « non favoris ». Si l'état de favoris est « favoris », l'icône d'action « Supprimer des favoris » sera affiché, et si l'état de favoris est « non favoris », l'icône d'action 25-3 « Ajouter aux favoris » sera affiché.

L'icône d'action 25-4 «Enregistrer» nécessite la vérification d'un état pour son affichage à savoir un état de droit d'accès relatif à la série active parmi les états « autorisé à enregistrer » et « non autorisé à enregistrer », l'état de droit d'accès étant extrait de la base de données relative aux séries de cartes 27. Si l'état de droit d'accès est « autorisé à enregistrer », l'icône d'action 25-4 « Enregistrer » sera affiché dans le menu d'action 24, sinon celui-ci ne sera pas affiché.

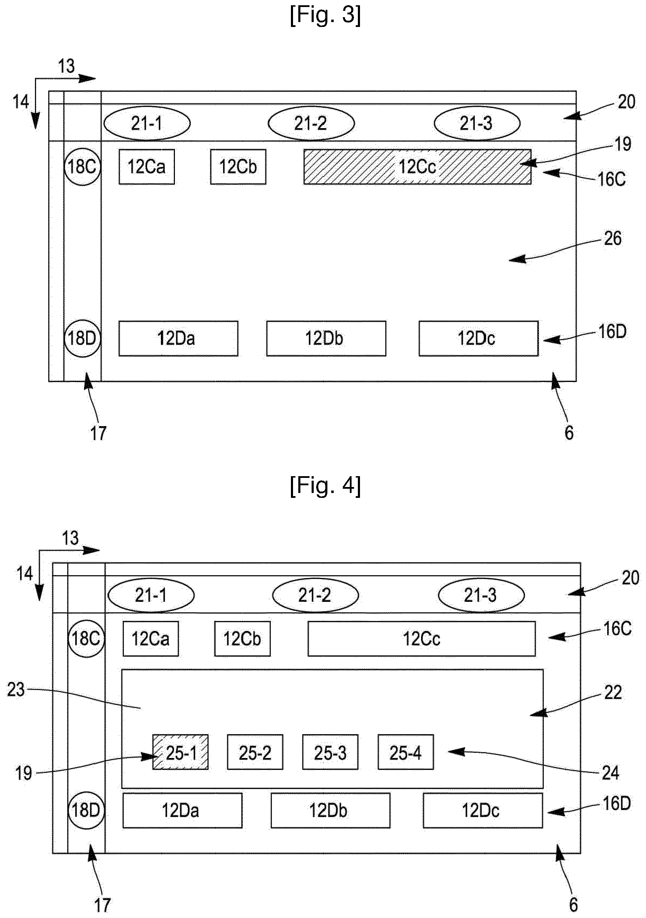

Dans l'exemple illustré en figure 4, pour la carte active 12Cc, les données d'état extraites des bases de données sont « non favoris », « non autorisé à recommencer », et « autorisé à enregistrer » tandis que l'état de diffusion du programme est « diffusion en cours ». Dès lors, le menu d'action 24 illustré en figure 4 affiche l'icône d'action 25-1 « Aller sur la chaîne », l'icône d'action 25-2 « Plus d'infos », l'icône d'action 25-3 « Ajouter aux favoris » et l'icône d'action 25-4 « Enregistrer ». Le menu d'action 24 de cet exemple n'affichera donc pas l'icône d'action « Supprimer des favoris » et l'icône d'action « Recommencer ».

Après cette configuration, il est prévu de générer une carte modale 22 qui comprendra notamment le menu d'action 24 ainsi que les éléments descriptifs supplémentaires 23.

Pour permettre l'affichage de la carte modale 22 dans la portion affichable 6, il est prévu de déplacer les séries de cartes de programme 16 pour dévoiler un espace d'affichage 26 dans la portion affichable 6.

La figure 3 illustre le résultat de ce déplacement permettant de dévoiler l'espace d'affichage 26. En effet, dans le mode de réalisation représenté passant de la figure 2 à la figure 3, cette étape prévoit de déplacer dans une première direction, ici de bas en haut, selon l'axe des chaînes 14 un premier ensemble de séries formé des séries de carte comprenant la série de cartes active, ici la série de cartes 16C et les séries de cartes situées après la série de carte active dans la première direction, soit les séries de cartes 16A et 16B. Cette étape prévoit également de déplacer dans une deuxième direction opposée à la première direction, soit de haut en bas, un deuxième ensemble de séries formé des séries de carte situées après la série de carte active , ici les séries de cartes 16D et 16E dans la deuxième direction. L'espace d'affichage 26 est ainsi dévoilé et est positionné sensiblement où était positionné le pointeur de carte active 19 avant le déplacement, comme visible en figure 3.

Ainsi, dans l'exemple illustré et suite au déplacement, seules les séries de cartes 16C et 16D sont encore situées dans la portion affichable 6.

Suite à ce déplacement, il est prévu l'étape d'affichage de la carte modale 22 dans l'espace d'affichage 26 comme illustré en figure 4. Le pointeur de carte active 19 est de plus déplacé sur l'un des icônes d'action 25 de la carte modale 22, dans l'exemple illustré l'icône d'action 25-1. La carte modale 22 illustrée dans ce mode de réalisation comporte ainsi en partie supérieure les éléments descriptifs supplémentaires 23 et dans une partie inférieure le menu d'action 24, le menu d'action 24 s'étendant selon l'axe des temps 13 de sorte que les icônes d'action 25 sont alignés. Dans d'autres modes de réalisation non représentés, la carte modale 22 peut également être structurée différemment.

La carte modale 22 contenant les informations supplémentaires demandées par l'utilisateur est ainsi générée de manière dynamique et disposée dans la portion affichable 6 tout en masquant une partie des informations initialement présentes dans la portion affichable 6. De plus, il est toujours possible pour l'utilisateur de naviguer dans la grille de programmes 6.

Le procédé de gestion de l'interface graphique décrit ci-après concerne également la navigation dans la portion affichable 6 suite à la réception d'une commande de retour arrière ou d'une commande de navigation.

En effet, après l'apparition de la carte modale 22, l'utilisateur peut souhaiter soit interagir avec l'un des icones d'action 25 en se déplaçant dans le menu d'action 24 et en sélectionnant un, soit sortir de la carte modale 22 pour revenir à la grille de programmes 15.

Dans un premier cas, une commande de retour arrière est reçue qui indique donc que l'utilisateur ne souhaite plus visualiser la carte modale 22. En réception d'une telle commande de retour arrière, il est prévu tout d'abord de masquer la carte modale 22 puis de déplacer dans la deuxième direction, soit de haut en bas, le premier ensemble de séries composé des séries de cartes 16A, 16B et 16C, et de déplacer dans la première direction, soit de bas en haut, le deuxième ensemble de séries composé des séries de cartes 16D et 16E, de sorte à combler l'espace d'affichage 26 dans la portion affichable 6. Le pointeur de carte active 19 est de nouveau placé sur la carte active 16Cc. Ainsi, lors de la réception d'une commande de retour arrière, la portion affichable passe de celle illustrée à la figure 4 à celle illustrée en figure 2.

En résumé, avant l'apparition de la carte modale 22, l'utilisateur avait le regard fixé sur la carte active 16Cc située au centre de la portion affichable 6. Lors de l'apparition de la carte modale 22, l'utilisateur garde le regard fixé au centre de la portion affichable 6 puisque la carte modale 22 apparait dans cette même zone. Enfin lorsque l'utilisateur souhaite fermer la carte modale 22, la portion affichable 6 retourne à son état initial en repositionnant la carte active Cc au centre de la portion affichable 6. Ainsi, le procédé de gestion permet d'afficher et désafficher de nouvelles informations sur une carte active sans nécessiter à l'utilisateur de déplacer le regard.

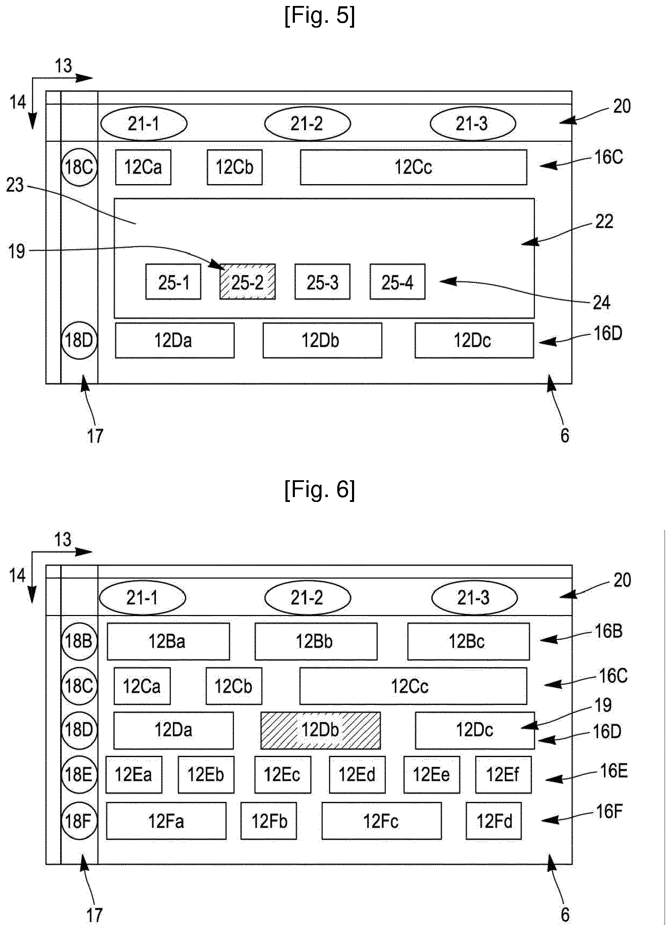

Les figures 5 et 6 représentent deux autres exemples dans lesquels à partir de la figure 4 avec une carte modale 22 affichée, une commande de navigation a été reçue.

Dans le cas de la figure 5, une commande de navigation dans une direction de navigation, ici vers la droite, a été reçue. En réception d'une telle commande de navigation, il est prévu de déplacer le pointeur de carte active 19 d'un icône d'action 25 vers la droite de sorte à passer de l'icône d'action 25-1 à l'icône d'action 25-2.

Dans le cas de la figure 6, une commande de navigation dans une direction de navigation, ici vers le bas, a été reçue. En réception d'une telle commande de navigation qui indique que l'utilisateur souhaite changer de série active, il est prévu tout d'abord de masquer la carte modale 22 puis de déplacer dans la deuxième direction, soit de haut en bas, le premier ensemble de séries composé des séries de cartes 16A, 16B et 16C, et de déplacer dans la première direction, soit de bas en haut, le deuxième ensemble de séries composé des séries de cartes 16D et 16E, de sorte à combler l'espace d'affichage 26 dans la portion affichable 6. Le pointeur de carte active 19 est de nouveau placé sur la carte active 16Cc comme c'était le cas sur la figure 2 puis est déplacé d'une carte de programme 12 dans la direction de navigation, soit vers le bas. Ainsi, suite à cette commande de navigation, la carte modale 22 a été masquée et la carte de programme 12Db est devenue la nouvelle carte active.

Le procédé de gestion de l'interface graphique décrit ci-dessus peut être mis en œuvre dans une interface graphique présentée de manière différente, par exemple quant au nombre des séries affichées, l'orientation des séries, les dimensions des cartes programmes, etc.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. |Procédé de gestion d'une interface graphique représentant un guide des programmes, l'interface graphique comportant :
- une grille de programmes (15) formée d'une pluralité de séries de cartes de programme (16), chaque série de cartes de programme (16) étant associée à une chaîne de diffusion respective, chaque carte de programme (12) représentant un programme à diffuser par ladite chaîne de diffusion associée, chaque carte de programme (12) étant associée à une pluralité d'attributs de programme incluant un instant de début de programme et un descriptif du programme, les cartes de programme (12) d'une série de cartes de programme (16) étant positionnées par ordre chronologique le long d'un premier axe (13) de l'interface graphique, la pluralité de séries de cartes de programmes étant positionnée le long d'un deuxième axe (14) de l'interface graphique,
- un pointeur de carte active (19) qui est une zone de l'interface graphique, la carte de programme (12) de l'interface graphique sur laquelle le pointeur de carte active (19) est positionné constituant une carte active de l'interface graphique et la série de cartes de programme (16) contenant la carte active constituant une série active de l'interface graphique,
dans lequel le procédé de gestion comporte :
- afficher une portion affichable (6) de l'interface graphique sur un dispositif d'affichage correspondant à une plage horaire prédéfinie, la portion affichable (6) comportant un sous-ensemble de la pluralité de séries de cartes de programme, la portion affichable (6) comprenant pour chaque série de cartes de programme (16) dudit sous-ensemble l'ensemble des cartes de programme (12) qui ont un instant de début de programme compris dans la plage horaire prédéfinie,
- recevoir une commande de sélection de la carte active,
- consulter une base de données relative aux séries de cartes (27) pour obtenir des données d'état relatives à la série active et à la carte active et une base de données relative à l'utilisateur (28) pour obtenir des données d'état relatives à l'utilisateur,
- configurer un menu d'action (24) pour afficher une ou plusieurs icônes d'action (25) en fonction desdites données d'état relatives à la série active, à la carte active et à l'utilisateur, ladite ou chaque icône d'action (25) étant sélectionnable pour commander des actions relatives au programme associé à la carte active,
- générer une carte modale (22) comportant ledit menu d'action (24),
- déplacer dans une première direction selon le deuxième axe (14) un ensemble de séries formé des séries de carte comprenant la série de carte active et les séries de cartes situées après la série de carte active dans la première direction, de sorte à dévoiler un espace d'affichage (26) dans la portion affichable (6),
- afficher la carte modale (22) dans l'espace d'affichage (26),
- déplacer le pointeur de carte active (19) sur l'un des icônes d'action (25) de la carte modale (22).
dans lequel l'étape de configuration du menu d'action (24) comporte les sous-étapes suivantes :
- en fonction desdites données d'états, déterminer un état de droit d'accès relatif à la série active parmi les états « autorisé à enregistrer » et « non autorisé à enregistrer », l'état de droit d'accès étant extrait de la base de données relative aux séries de cartes,
- si l'état de droit d'accès est « autorisé à enregistrer », afficher dans le menu d'action (24) un icône d'action (25) « Enregistrer », l'icône d'action (25) « Enregistrer » étant sélectionnable pour programmer un enregistrement du programme associé à la carte active sur un dispositif d'enregistrement.

2. Procédé de gestion d'une interface graphique selon la revendication 1, dans lequel l'ensemble de séries est un premier ensemble de séries, et dans lequel l'étape de déplacement comprend également :
- déplacer dans une deuxième direction opposée à la première direction un deuxième ensemble de séries formé des séries de carte (16) situées après la série de carte active dans la deuxième direction.

3. Procédé de gestion d'une interface graphique selon la revendication 1 ou la revendication 2, dans lequel l'étape de configuration du menu d'action (24) comporte les sous-étapes suivantes :
- déterminer un état de diffusion du programme relatif à la carte active parmi les états « diffusion en cours » et « pas de diffusion en cours » en fonction d'un instant présent,
- en fonction desdites données d'états, déterminer un état de droit d'accès relatif à la série active parmi les états « autorisé à recommencer » et « non autorisé à recommencer », l'état de droit d'accès étant extrait de la base de données relative aux séries de cartes,
- si l'état de diffusion est « diffusion en cours » et que l'état de droit d'accès est « autorisé à recommencer », afficher dans le menu d'action (24) un icône d'action (25) « Recommencer », l'icône d'action (25) « Recommencer » étant sélectionnable pour lancer un enregistrement du programme associé à la carte active depuis l'instant de début de programme de la carte active.

4. Procédé de gestion d'une interface graphique selon l'une des revendications 1 à 3, dans lequel l'étape de configuration du menu d'action (24) comporte les sous-étapes suivantes :
- en fonction desdites données d'états, déterminer un état de favoris relatif à la carte active parmi les états « favoris » et « non favoris », l'état de favoris étant extrait de la base de données relative à l'utilisateur,
- si l'état de favoris est « non favoris », afficher dans le menu d'action (24) un icône d'action (25) « Ajouter aux favoris », l'icône d'action (25) « Ajouter aux favoris » étant sélectionnable pour modifier l'état de favoris associé à la carte active par « favoris » dans la base de données relative à l'utilisateur,
- si l'état de favoris est « favoris », afficher dans le menu d'action (24) un icône d'action (25) « Supprimer des favoris », l'icône d'action (25) « Supprimer des favoris » étant sélectionnable pour modifier l'état de favoris associé à la carte active par « non favoris » dans la base de données relative à l'utilisateur.

5. Procédé de gestion d'une interface graphique selon l'une des revendications 1 à 4, dans lequel la carte active est située au centre de la portion affichable (6) avant l'étape de déplacement, la carte modale (22) et l'espace d'affichage (26) étant situées au milieu de la portion affichable (6) selon le deuxième axe (14).

6. Procédé de gestion d'une interface graphique selon l'une des revendications 1 à 5, comportant en outre :
- recevoir une commande de navigation présentant une direction de navigation le long du premier axe (13) dans l'interface graphique,
- déplacer le pointeur de carte active (19) d'un icône d'action (25) dans la direction de navigation.

7. Procédé de gestion d'une interface graphique selon l'une des revendications 1 à 6, comportant en outre :
- recevoir une commande de navigation présentant une direction de navigation le long du deuxième axe (14) dans l'interface graphique,
- masquer la carte modale (22),
- déplacer dans une deuxième direction opposée à la première direction l'ensemble de séries de sorte à combler l'espace d'affichage (26) dans la portion affichable (6),
- positionner le pointeur de carte active (19) sur la carte active,
- déplacer le pointeur de carte active (19) d'une carte de programme (12) dans la direction de navigation.

8. Procédé de gestion d'une interface graphique selon l'une des revendications 1 à 6, comportant en outre :
- recevoir une commande de retour arrière,
- masquer la carte modale (22),
- déplacer dans une deuxième direction opposée à la première direction l'ensemble de séries de sorte à combler l'espace d'affichage (26) dans la portion affichable (6),
- positionner le pointeur de carte active (19) sur la carte active.

9. Procédé de gestion d'une interface graphique selon l'une des revendications 1 à 8, dans lequel le procédé comporte avant l'étape de réception d'une commande de sélection, les étapes suivantes :
- recevoir une commande de navigation présentant une direction de navigation le long du premier axe (13) ou du deuxième axe (14) dans l'interface graphique,
- déplacer le pointeur de carte active (19) d'une carte de programme (12) dans la direction de navigation.

10. Procédé de gestion d'une interface graphique selon l'une des revendications 1 à 9, dans lequel la commande de sélection est générée à l'aide d'un organe de commande comportant une touche de sélection.

11. Procédé de gestion d'une interface graphique selon l'une des revendications 1 à 10, dans lequel la dimension d'une carte de programme (12) selon le premier axe (13) est proportionnelle à une durée du programme.

12. Dispositif de gestion d'une interface graphique comportant un module de commande (10), l'interface graphique comportant :
une grille de programmes (15) formée d'une pluralité de séries de cartes de programmes, chaque série de cartes de programme (16) étant associée à une chaîne de diffusion respective, chaque carte de programme (12) représentant un programme à diffuser par ladite chaîne de diffusion associée, chaque carte de programme (12) étant associée à une pluralité d'attributs de programme incluant un instant de début de programme et un descriptif du programme, les cartes de programme d'une série de cartes de programme (16) étant positionnées par ordre chronologique le long d'un premier axe (13) de l'interface graphique, la pluralité de séries de cartes de programmes étant positionné le long d'un deuxième axe (14) de l'interface graphique,
un pointeur de carte active (19) qui est une zone de l'interface graphique, la carte de programme (12) de l'interface graphique sur laquelle le pointeur de carte active (19) est positionné constituant une carte active de l'interface graphique et la série de cartes de programme (16) contenant la carte active constituant une série active de l'interface graphique,
dans lequel le module de commande (10) est configuré pour :
- afficher une portion affichable (6) de l'interface graphique sur un dispositif d'affichage correspondant à une plage horaire prédéfinie, la portion affichable (6) comportant un sous-ensemble de la pluralité de séries de cartes de programme, la portion affichable (6) comprenant pour chaque série de cartes de programme (16) dudit sous-ensemble, l'ensemble des cartes de programme qui ont un instant de début de programme compris dans la plage horaire prédéfinie,
- recevoir une commande de sélection de la carte active,
- consulter une base de données relative aux séries de cartes pour obtenir des données d'état relatives à la série active et à la carte active et une base de données relative à l'utilisateur pour obtenir des données d'état relatives à l'utilisateur,
- configurer un menu d'action (24) pour afficher une ou plusieurs icônes d'action (25) en fonction desdites données d'état relatives à la série active, à la carte active et à l'utilisateur, ladite ou chaque icône d'action (25) étant sélectionnable pour commander des actions relatives au programme associé à la carte active,
- générer une carte modale (22) comportant ledit menu d'action (24),
- déplacer dans une première direction selon le deuxième axe (14) un ensemble de séries formé des séries de carte comprenant la série de carte active et les séries de cartes situées après la série de carte active dans la première direction, de sorte à dévoiler un espace d'affichage (26) dans la portion affichable (6),
- afficher la carte modale (22) dans l'espace d'affichage (26),
- déplacer le pointeur de carte active (19) sur l'un des icônes d'action (25) de la carte modale (22)
dans lequel l'étape de configuration du menu d'action (24) comporte les sous-étapes suivantes :
- en fonction desdites données d'états, déterminer un état de droit d'accès relatif à la série active parmi les états « autorisé à enregistrer » et « non autorisé à enregistrer », l'état de droit d'accès étant extrait de la base de données relative aux séries de cartes,
- si l'état de droit d'accès est « autorisé à enregistrer », afficher dans le menu d'action (24) un icône d'action (25) « Enregistrer », l'icône d'action (25) « Enregistrer » étant sélectionnable pour programmer un enregistrement du programme associé à la carte active sur un dispositif d'enregistrement..

13. Système de gestion comportant un dispositif de gestion d'une interface graphique selon la revendication 12 et un serveur (2), le serveur (2) et le dispositif de gestion d'une interface graphique étant reliés l'un à l'autre à l'aide d'un réseau d'accès (4). |
